# FASCICULE DE BREVET EUROPEEN

(11) **EP 1 942 428 B1**
(45) Date de publication et mention de la délivrance du brevet: **26.02.2020**
(21) Numéro de dépôt: 07124045.1
(22) Date de dépôt: 21.12.2007
(51) Int. Cl.: G06F 21/57, G06F 21/77

(54) **Procédé de vérification de conformité d'une plateforme électronique et/ou d'un programme informatique présent sur cette plateforme, dispositif et programme d'ordinateur correspondants**
Verfahren zur Konformitätsprüfung einer elektronischen Plattform und/oder eines Softwareprogramms auf dieser Plattform sowie entsprechende Vorrichtung und entsprechendes Computerprogramm
Method for verifying the conformity of an electronic platform and/or a computer program installed on this platform, corresponding device and computer program

(30) Priorité: 22.12.2006 FR 0611348
(43) Date de publication de la demande: 09.07.2008
(73) Titulaire: Ingenico Group, 75015 Paris (FR)
(72) Inventeur: Naccache, M David, 75018, PARIS (FR)
(74) Mandataire: Vidon Brevets & Stratégie

(56) Documents cités:
- EP-A- 1 653 321
- WO-A-00/17826
- WO-A-99/09521
- WO-A-2004/113940
- DE-A1- 10 041 669
- US-A- 5 570 012
- US-A1- 2005 213 755

## Description

### 1. Domaine de l'invention

Le domaine de l'invention est celui de la lutte contre la contrefaçon d'objets à microprocesseur sécurisé, appelé par la suite plateforme électronique ou puce électronique, et/ou de programmes destinés à être intégrés dans de tels objets à puce électronique.

L'invention concerne plus particulièrement la détection de fraude, de tentative de fraude ou autre action illégale à l'aide d'objets à puce copiés, imités, ou clonés, ou portant un programme non authentique, par exemple malveillant (virus, cheval de Troie...).

L'invention s'applique notamment aux cartes à puce. On décrit donc par la suite essentiellement de telles cartes à puce, mais l'invention peut aisément être mise en œuvre pour tout type d'objet, notamment portatif, équipé d'une telle puce, quelle que soit la nature de cette dernière.

### 2. Art antérieur

### 2.1 Les cartes à puce

On utilise depuis longtemps des cartes à puce, notamment pour identifier ou authentifier un produit, un compte et/ou une personne. La puce, ou microprocesseur, présente donc une structure spécifique de transistors, définissant une logique de traitement et des zones de mémoire, dont au moins une partie sécurisée, contenant des données secrètes.

### 2.2 Détection de cartes clonées

Une carte à puce, utilisée par exemple comme moyen de paiement, comporte donc un circuit électronique, appelé puce électronique, dans lequel le comportement logique de la carte, c'est-à-dire les réponses aux diverses sollicitations qu'elle peut recevoir, est programmé. Un tel circuit électronique peut comporter notamment des composants électroniques simples (des transistors, des amplificateurs opérationnels), des composants complexes (des microprocesseurs, des mémoires) et des composants numériques (des portes logiques), combinés entre eux par un logiciel de création de composants, pour effectuer les opérations pour lesquelles la carte est conçue.

Il existe des méthodes de détection de cartes à puce non conformes, basées sur une vérification du comportement logique de la carte à tester.

Ces méthodes permettent de vérifier que le comportement programmé de la carte est correct. Elles ne permettent cependant pas de détecter une carte clonée.

En effet, une carte à puce clonée, si elle a été efficacement programmée, présente le même comportement logique qu'une carte à puce "légitime" (c'est-à-dire mise sur le marché par les fabricants habilités de cartes à puce). Elle se distingue donc par sa constitution, puisqu'elle ne comporte pas le même circuit électronique, mais non par son comportement.

Il est effectivement très difficile pour un contrefacteur de se procurer des circuits électroniques légitimes, leur diffusion étant réservée aux fabricants de cartes. Cependant, un contrefacteur ayant extrait d'une carte légitime les informations lui permettant de reproduire son comportement logique, peut programmer un circuit électronique acheté dans le commerce pour produire une carte clonée.

Une telle carte clonée est difficilement différenciable d'une carte légitime, leurs comportements logiques étant identiques. Elles se différencient uniquement par la « jungle » de transistors qui les constituent. Cependant, ces « jungles » ne sont pas facilement analysables, d'une part parce qu'elles sont non interprétables (il s'agit du résultat d'un traitement informatique dont l'aspect est aléatoire), et d'autre part parce que la comparaison nécessiterait la destruction des cartes et l'usage de moyens coûteux tels que des microscopes électroniques.

Ainsi, il est actuellement possible de contrôler le comportement logique d'une carte à puce, mais il n'existe pas à ce jour de méthode de détection efficace capable de détecter des cartes à puce clonées, qui ont le même comportement logique mais des composants différents.

WO 00/17826 A1 et US 5 570 012 A décrivent des procédés pour tester l'authenticité d'une plateforme électronique.

### 2.3 Détection d'un programme malveillant

Il existe également des cartes à puce dont le programme est contrefait de manière à induire un comportement particulier de la carte en réponse à une sollicitation prédéfinie par un fraudeur (par exemple effectuer une transaction non autorisée ou accéder à des données protégées permettant ensuite de produire des cartes clonées).

De tels programmes, appelés programmes corrompus ou malveillants, peuvent s'avérer quasiment indétectables par une méthode classique de détection de comportement logique d'une carte.

En effet, le comportement malveillant de tels programmes est souvent déclenché par une sollicitation particulière (par exemple une séquence binaire de grande longueur et sans signification pour le programme « normal ») qui ne peut pas être détectée dans les conditions de temps et de ressources dont disposent les méthodes de détection existantes, mais qui peut entraîner un comportement particulier pré-programmé par le fraudeur.

Il existe par exemple des méthodes de détection de programmes malveillants basées sur de la rétro-ingénierie, c'est-à-dire sur la restitution et la vérification du programme contenu dans une carte à tester.

Cependant, certains de ces programmes malveillants ont la faculté de "contrer" ces méthodes de détection basées sur de la rétro-ingénierie, et d'apparaître ainsi comme des programmes légitimes.

Une autre technique de lutte contre ces programmes malveillants ou corrompus peut consister à effacer le programme contenu dans une carte et à le remplacer par un programme légitime.

Cependant, là encore, certains programmes malveillants ont la faculté de se comporter comme s'ils étaient effectivement totalement écrasés par un nouveau programme alors qu'en réalité ils sont toujours présents dans la carte et prêts à être activés.

Il n'existe donc pas à ce jour de méthode efficace de détection de programme malveillant dans une carte à puce.

### 3. Objectifs de l'invention

L'invention a notamment pour objectif de pallier au moins certains de ces inconvénients de l'art antérieur.

Plus précisément, un objectif de l'invention, selon au moins un mode de réalisation, est de détecter un objet à puce clonée, de façon simple et efficace.

Un autre objectif de l'invention, selon au moins un autre mode de réalisation, est de détecter un programme corrompu, ou malveillant, dans un objet à puce, de façon simple et efficace.

Notamment, l'invention a pour objectif de fournir une telle technique présentant de meilleures performances en termes d'efficacité de détection d'objets à puce clonés et/ou de programmes malveillants, en termes de ressources à mettre en œuvre pour de telles détections et en termes de temps nécessaire à de telles détections.

Ainsi, un objectif de l'invention est de fournir une telle technique, qui puisse être mise en œuvre à coût réduit dans un terminal, par exemple chez un commerçant, et qui permette un contrôle en quelques secondes.

### 4. Exposé de l'invention

L'invention propose une solution nouvelle qui ne présente pas au moins certains de ces inconvénients de l'art antérieur, sous la forme d'un procédé de vérification d'une conformité d'une plateforme électronique, dite plateforme à tester, et/ou d'un programme informatique à tester présent dans ladite plateforme à tester.

Selon l'invention, le procédé comprend une étape de transmission, par un dispositif de vérification, d'un même jeu d'informations d'une part à ladite plateforme à tester et d'autre part à une plateforme de référence de conformité présente dans ledit dispositif de vérification, et une étape de décision de conformité de ladite plateforme à tester et/ou dudit programme informatique à tester, en fonction d'une analyse des comportements respectifs de ladite plateforme à tester et de ladite plateforme de référence, ladite analyse tenant compte d'une corrélation entre au moins deux signaux représentatifs de mesures de courant effectuées simultanément ou séquentiellement respectivement sur ladite plateforme à tester et ladite plateforme de référence, sur une période de mesure prédéterminée.

Ainsi, l'invention permet de vérifier la conformité d'une plateforme à tester et/ou d'un programme à tester dans une plateforme à tester, en analysant son comportement, logique et physique, et celui d'une plateforme de référence, dans les mêmes conditions de test.

Dans un premier temps, le dispositif de vérification transmet les mêmes informations aux deux plateformes, et suit leur comportement selon des critères prédéterminés (temps de réponse, consommation de courant, rayonnement électromagnétique,...), et dans un deuxième temps, le dispositif de vérification décide de la conformité de la plateforme à tester et/ ou du programme informatique à tester, en fonction de l'analyse des comportements des deux plateformes pendant la vérification. Pour ce faire, le dispositif de vérification effectue des mesures de courant simultanément ou séquentiellement sur la plateforme à tester et la plateforme de référence puis compare ensuite des signaux représentatifs de ces mesures de courant.

Selon l'invention, ladite comparaison comprend une corrélation entre lesdits signaux sur une période de mesure prédéterminée.

En d'autres termes, selon l'invention, on ne prend pas (uniquement) en compte des réponses (résultats de traitements logiques) délivrées par les plateformes, mais leur comportement, ou leur fonctionnement, leur interaction avec l'entourage. On peut assimiler cette approche à celle d'un détecteur de mensonges, qui ne tient pas compte seulement de la réponse formulée, mais d'une analyse du comportement biologique et gestuel de l'individu.

En effet, un principe du procédé de vérification selon l'invention repose sur l'observation suivante : une plateforme à tester, ou une plateforme ayant un programme à tester, et une plateforme de référence ont des comportements "électriques" comparables quand elles sont soumises aux mêmes conditions d'utilisation.

En particulier, les consommations de courant dans les deux plateformes doivent présenter des variations comparables si la plateforme à tester est conforme, et a contrario, les deux plateformes présentent des variations complètement différentes si la plateforme à tester n'est pas conforme.

Le dispositif de vérification se base sur une corrélation entre les signaux représentatifs des mesures de courant dans les deux plateformes pour délivrer sa décision de conformité. Cette corrélation est effectuée sur une période prédéterminée, définie de manière à rendre optimale la vérification de conformité. Cette période peut également être fonction d'un taux d'erreur maximal accepté par le procédé, et/ou d'un temps maximal accepté pour la délivrance de la décision de conformité.

Une corrélation permet d'observer des différences de consommation de courant entre une plateforme non conforme et une plateforme conforme, tout en tenant compte d'éventuelles différences de consommation de courant dues à la fabrication des composants des plateformes, dans le cas de deux plateformes conformes. Ainsi, une comparaison stricte entre des signaux montrera des différences ou des adéquations de valeurs, alors qu'une corrélation montrera des différences ou des similitudes dans les variations, tenant ainsi compte d'éventuelles différences de valeurs dues à la fabrication des composants.

En particulier, ladite corrélation met en œuvre au moins un des calculs appartenant au groupe comprenant :
- un calcul de corrélation temporelle ;
- un calcul de corrélation fréquentielle.

De plus, selon un aspect particulier de l'invention, lesdites mesures de courant subissent au moins un des traitements préalables appartenant au groupe comprenant :
- les filtrages ;
- les numérisations ;
- les transformations mathématiques ;
- les amplifications.

Ainsi, selon les moyens mis en œuvre dans le dispositif de vérification, la structure des signaux de mesure et les résultats attendus en termes d'efficacité du procédé de vérification, les mesures de courant seront adaptées avant d'être utilisées dans un calcul de corrélation. Un traitement complexe et particulier de ces mesures permet une meilleure fiabilité du procédé de vérification. Il présente également l'avantage de rendre plus complexe la tâche d'un contrefacteur qui tenterait de réaliser une copie d'une plateforme. Cette complexité peut encore être augmentée en faisant varier certains traitement de façon aléatoire (par exemple les instants ou les fréquences prises en compte).

Selon un aspect de l'invention, lesdites mesures de courant sont effectuées sur les alimentations respectives desdites plateforme à tester et plateforme de référence. En effet, l'alimentation de telles plateformes est en général facilement accessible et identifiable sur le circuit électronique, ce qui permet d'effectuer des mesures de courant aux mêmes endroits sur les deux plateformes, garantissant ainsi un des critères de similitude des conditions de test pour les deux plateformes.

Selon un autre aspect de l'invention, le procédé de vérification comprend une étape de stabilisation de la consommation de courant desdites plateforme à tester et plateforme de référence, préalable à ladite analyse.

Ainsi, afin de s'assurer de la validité des mesures de courant effectuées dans chacune des plateformes, la consommation de courant est stabilisée dans chacune des plateformes, qui se trouvent donc ensuite dans des états physiques, ou électriques, similaires.

En effet, chaque tâche effectuée par un des composants d'une plateforme génère une consommation de courant particulière, au moment de l'exécution de la tâche, et peut également entraîner une consommation de courant lors de l'exécution des tâches suivantes. Il est donc préférable de s'assurer d'une stabilité de la consommation de courant dans chacune des plateformes avant les mesures effectuées pour la vérification de conformité.

En particulier, ladite étape de stabilisation peut comprendre une transmission d'une série de commandes identiques auxdites plateforme à tester et plateforme de référence.

Les commandes peuvent être prédéfinies, choisies en fonction de leurs conséquences sur la consommation de courant dans les plateformes, ou sélectionnées aléatoirement.

Selon un aspect particulier de l'invention, le procédé comprend une étape de désactivation d'une protection contre des attaques par canaux cachés, préalable à ladite analyse, ladite désactivation étant conditionnée à une authentification dudit dispositif de vérification.

En effet, certaines plateformes sont protégées contre certaines formes d'attaques par mesure de courant. Une telle protection, encore appelée contre-mesure, consiste à cacher la consommation de courant d'une plateforme à un "observateur extérieur", en brouillant cette consommation ou en présentant une consommation chaotique de courant, non représentative de la consommation réelle de courant dans la plateforme.

Afin de pouvoir baser la vérification de conformité sur des mesures de courant, le dispositif de vérification pourra désactiver des contre-mesures, après s'être préalablement authentifier auprès des plateformes.

De plus, selon un autre aspect particulier de l'invention, lesdites plateforme à tester et plateforme de référence sont soumises, pendant ladite analyse, à au moins une variation d'au moins un paramètre externe appartenant au groupe comprenant :
- la valeur de tension d'alimentation ;
- la forme de la tension d'alimentation ;
- la température ;
- la fréquence d'horloge ;
- le rapport cyclique d'horloge ;
- la forme de l'horloge.

Ainsi, une ou des variations de paramètres externes permettent d'obtenir une meilleure fiabilité du procédé de vérification, car des composants différents réagissent différemment à de telles variations, et rendent plus complexes les copies éventuelles.

Selon un mode de réalisation particulier de l'invention, plusieurs plateformes de référence sont présentes dans ledit dispositif de vérification, et le procédé de vérification comprend une étape de sélection de la plateforme de référence correspondant à la plateforme à tester.

Selon une variante de réalisation, le procédé de vérification selon l'invention comprend, pendant ladite analyse, une étape de chargement dynamique d'au moins un programme de test simultanément ou séquentiellement dans lesdites plateforme à tester et plateforme de référence, à des emplacements mémoire identiques et une étape de lancement dudit programme de test, simultanément ou séquentiellement dans lesdites plateforme à tester et plateforme de référence.

Ainsi, le dispositif de vérification effectue des mesures de courant pendant le fonctionnement d'un programme de test, chargé dynamiquement dans les deux plateformes (à tester et de référence).

En particulier, le procédé de vérification peut comprendre une étape de génération aléatoire dudit programme de test, préalable à ladite étape de chargement dynamique.

Ainsi, les moyens mis en œuvre dans le dispositif de vérification pour effectuer une vérification de conformité sont difficiles à anticiper (par exemple en vue de fabriquer des plateformes frauduleuses capables de "contrer" un tel procédé de vérification), puisque le dispositif génère lui-même un programme de test qu'il télécharge dans chacune des plateformes avant de commencer la vérification. Le programme de test n'est donc pas connu à l'avance.

Dans ce cas particulier, ladite étape de génération dudit programme de test peut tenir compte d'au moins une règle de confinement dudit programme aléatoire dans un espace mémoire prédéterminé, interdisant un accès à des zones de mémoire non autorisées de ladite plateforme à tester et de ladite plateforme de référence.

Ainsi, le dispositif de vérification s'assure que le programme qu'il va générer ne peut pas dégrader le fonctionnement des plateformes dans lesquelles il le charge, par exemple en accédant à des zones mémoire non autorisées.

Le procédé de vérification comprend avantageusement une étape de contrôle dudit programme de test aléatoire par la plateforme dans laquelle il est téléchargé.

Ainsi, une plateforme de référence (respectivement une plateforme à tester) comprend des moyens de s'assurer que le programme de test aléatoire qu'elle reçoit est conforme à son fonctionnement, et par exemple n'accepte pas d'instructions accédant à des zones mémoire non autorisées.

Selon un mode de réalisation avantageux, ledit dispositif de vérification transmet au moins une donnée aléatoire audit programme de test pendant ladite analyse.

Ainsi, le dispositif de vérification reste en communication avec chacune des plateformes pendant le déroulement du programme de test.

Selon un autre aspect de l'invention, le procédé selon l'invention comprend, pendant ladite analyse, une étape de lancement d'un programme de vérification scrutant simultanément, ou séquentiellement, le comportement d'un programme à tester dans ladite plateforme à tester et d'un programme correspondant présent dans ladite plateforme de référence, dit programme de référence.

Dans ce cas, le dispositif de vérification vérifie la conformité d'un programme à tester, dans une plateforme à tester, en comparant son comportement à celui d'une plateforme de référence, comprenant un programme de référence. Pour ce faire, le dispositif de vérification dispose d'un programme de vérification accédant simultanément au programme à tester et au programme de référence, et effectue des mesures de courant, respectivement dans la plateforme à tester et la plateforme de référence, pendant le fonctionnement du programme de vérification.

Préférentiellement, ledit programme de vérification comprend des instructions de manipulation de ses propres octets et, respectivement, de tous les octets de l'ensemble des espaces mémoire de la plateforme à tester et de la plateforme de référence, et donc notamment les octets dudit programme à tester et dudit programme de référence, au moins certaines desdites instructions de manipulation appartenant au groupe comprenant :
- un calcul effectué sur des octets ;
- un chargement et un déchargement d'octets en mémoire.

De cette manière, le procédé de vérification analyse les mesures de courant des deux plateformes, pendant que le programme de vérification accède simultanément ou séquentiellement à tous les octets de la plateforme à tester et de la plateforme de référence, chaque instruction du programme de vérification entraînant un comportement particulier, en termes de consommation de courant, des plateformes.

Ainsi, si les octets du programme de référence et ceux du programme à tester sont différents, le procédé de vérification peut détecter des variations différentes des mesures de courant au moment ou le programme de vérification accède à ces octets différents, et ainsi supposer que les deux programmes sont différents.

Selon un aspect particulier de cette variante, ledit programme de vérification est stocké dans chacune desdites plateformes.

Par exemple, le programme de vérification peut faire partie du programme de référence, et supposé faire partie du programme à tester.

Dans ce cas, le procédé comprend, avant ladite étape de lancement dudit programme de vérification, une étape de lancement d'un programme comprenant au moins une instruction d'accès audit programme à tester et audit programme de référence permettant de lancer ledit programme de vérification.

Cette étape de lancement permet au dispositif de vérification de configurer, respectivement dans chaque plateforme, le programme de référence, et le programme à tester, de manière à ce qu'ils exécutent leur partie de programme correspondant au programme de vérification.

L'invention concerne également un dispositif de vérification d'une conformité d'une plateforme électronique, dite plateforme à tester, et/ou d'un programme informatique à tester présent dans ladite plateforme à tester selon le procédé décrit ci-dessus.

En particulier, un tel dispositif comprend des moyens de débit d'une carte bancaire portant ladite plateforme à tester, contrôlés par lesdits moyens de décision. Il peut notamment s'agir d'un terminal de paiement par carte bancaire, apte à vérifier la conformité d'une carte bancaire, ou d'un programme présent dans une telle carte.

L'invention concerne également les programmes d'ordinateur téléchargeables depuis au moins un réseau de communication et/ou enregistrés sur un support lisible par ordinateur et/ou exécutables par un processeur, comprenant des instructions de code de programme pour la mise en œuvre d'au moins certaines étapes du procédé de vérification décrit précédemment.

Finalement, l'invention concerne encore une plateforme électronique optimisée, apte à être vérifié selon le procédé de vérification décrit ci-dessus, et comprenant des moyens d'amplification et/ou d'augmentation des variations d'au moins une des caractéristiques dudit comportement.

Le procédé décrit ci-dessus peut bien sûr s'appliquer à tous types de plateformes, sans adaptation particulière. Cependant, il est possible de faciliter la vérification (en simplifiant les dispositifs de vérification ou la procédure de vérification associée), ou d'augmenter la fiabilité de cette vérification, en prévoyant que les plateformes elles-mêmes sont adaptées, lors de leur conception et/ou de leur production, pour renforcer certains comportements, et donc faciliter les comparaisons.

Par exemple, ces adaptations peuvent faire en sorte que les variations de courant sont amplifiés, ou plus rapides.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple de dispositif de vérification selon un mode de réalisation particulier de l'invention ;
- la figure 2 est un organigramme simplifié illustrant le principe général de l'invention ;
- les figures 3a et 3b présentent les différentes étapes mises en œuvre selon deux variantes d'un premier mode de réalisation particulier de l'invention ;
- la figure 4 présente les différentes étapes mises en œuvre selon un deuxième mode de réalisation particulier de l'invention.

### 6. Description d'un mode de réalisation de l'invention

### 6.1 Aspects généraux

Le principe général de l'invention repose sur une comparaison de comportement d'une plateforme électronique à tester par rapport à celui d'une plateforme de référence de conformité.

Dans les modes de réalisation décrits, ces comportements étudiés correspondent à des mesures de courant effectuées sur des plateformes en fonctionnement.

Ainsi, le procédé de vérification de conformité selon l'invention prend en considération les caractéristiques de consommation de courant (ou des informations liées ou similaires, telles que le temps de réponse ou le rayonnement émis) du circuit électronique présent sur chaque plateforme, dans des conditions identiques, pour détecter une plateforme non conforme et/ou un programme non conforme présent dans une plateforme.

En d'autres termes, le procédé de vérification selon l'invention considère le circuit électronique présent dans une plateforme comme une "empreinte digitale" de cette plateforme, sa structure particulière (« jungle » de transistors) induisant un comportement particulier, en termes de consommation de courant, qui ne peut pas être reproduit par un circuit et/ou un programme frauduleux ou imité, même si le résultat logique fourni est identique.

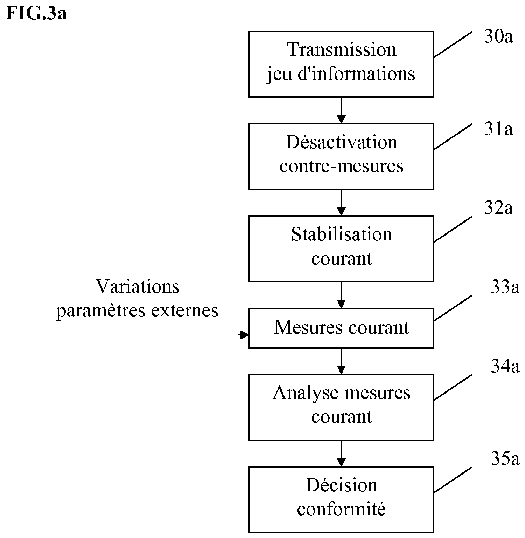

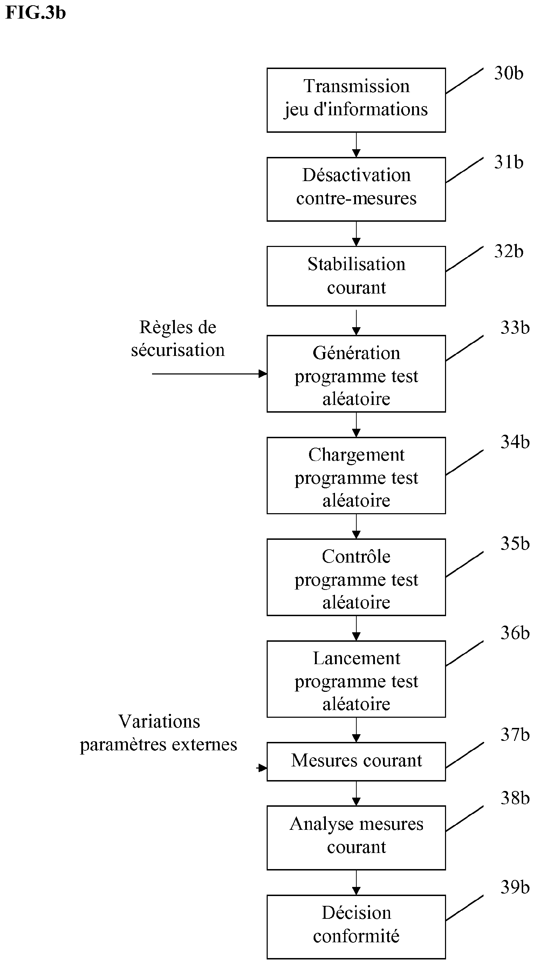

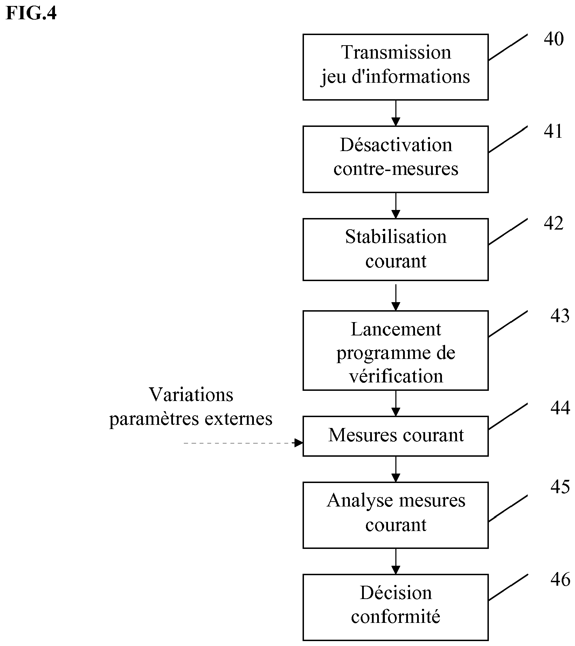

Deux modes de réalisation particuliers sont décrits par la suite :
- vérification de conformité d'une carte à puce (en relation avec les figures 3a et 3b) ;
- vérification de conformité d'un programme présent dans une carte à puce (en relation avec la figure 4).

Ces deux modes de réalisation peuvent être, le cas échéant, être combinés, et mis un œuvre par un même dispositif de vérification.

De manière générale, un circuit électronique utilisé dans une carte à puce est notamment constitué d'une pluralité de composants électroniques, ayant chacun un comportement donné pour effectuer une tâche donnée, et connectés entre eux. Ces composants sont intégrés dans un circuit de façon à satisfaire au comportement logique attendu pour la carte.

Ensuite, afin d'optimiser la taille du composant et donc d'en augmenter son rendement (plus un circuit est petit et plus son rendement est élevé en termes de rebut à la fabrication par exemple), le circuit est "synthétisé", c'est-à-dire que chaque composant, chaque connexion, sont placés de façon optimale sur le circuit, les composants ayant les mêmes fonctions sont "factorisés" si possible, etc. On obtient alors un circuit optimisé, encore appelé "netlist" (pour "liste d'interconnexions" en français).

Un tel circuit répond notamment aux différentes exigences attendues pour la carte telles que son comportement logique, la taille et le rendement du circuit, et possède des caractéristiques électriques très particulières, par exemple en terme de consommation de courant.

De plus, un avantage de ce circuit optimisé tient dans le fait qu'il est très difficilement reproductible à l'identique par un contrefacteur, et qu'il se différencie donc d'un circuit contrefait par ses caractéristiques électriques, notamment en terme de consommation de courant.

En effet, le circuit obtenu est formé d'un assemblage, non interprétable directement par un humain, de millions de transistors combinés entre eux de façon particulière (certains étant peut-être inutiles, d'autres utilisés efficacement plusieurs fois, pour des fonctions distinctes).

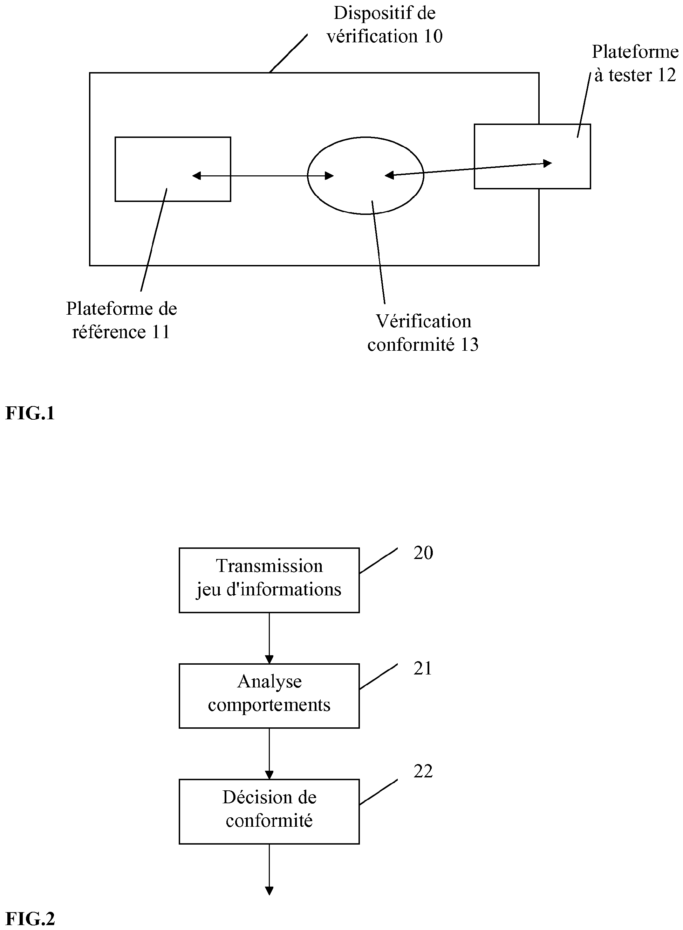

La figure 1 illustre un exemple de dispositif de vérification mettant en œuvre le procédé selon l'invention. Dans cet exemple, le dispositif de vérification est un terminal 10 de paiement, utilisé pour les paiements à l'aide de cartes à puce. Un tel terminal 10 contient une carte à puce de référence 11 et un accès extérieur pour une carte à puce à tester 12. Le terminal 10 comprend des moyens de mise en œuvre du procédé de vérification de conformité 13 selon l'invention.

Dans le cas où le terminal peut être amené à vérifier des cartes émises par plusieurs fabricants, il pourra comporter plusieurs cartes à puce de référence, correspondant respectivement aux différents types de cartes avec lesquelles il accepte d'effectuer des transactions.

En effet, de manière générale, un terminal de paiement est apte à effectuer des transactions avec plusieurs types de cartes à puce, correspondant par exemple à des organismes bancaires différents, et comportant des circuits électroniques différents.

Ainsi, un tel terminal de paiement peut être amené à vérifier la conformité de cartes à puce de différents types, et donc être amené à comparer les cartes à tester avec plusieurs cartes de référence. Comme chaque type de cartes présente un comportement particulier, le dispositif ou terminal de vérification met en œuvre une étape d'identification du type de la carte à tester (ou du type prétendu, s'il s'agit d'une carte non conforme) et sélectionne en conséquence la carte de référence.

On considère par la suite le cas particulier où le terminal est dédié spécifiquement à un type de cartes à puce et vérifie la conformité d'une carte à tester en la comparant à une seule carte de référence. Il s'agit donc de détecter une carte à tester qui aurait un comportement logique correct, mais dont la constitution, la structure au niveau des transistors qui la composent, serait différente.

Le procédé selon l'invention comporte trois étapes principales, comme illustré en figure 2.

Une première étape 20 de transmission d'un jeu d'informations permet au dispositif de vérification de signaler aux cartes de référence et à tester qu'elles vont entrer dans un mode de fonctionnement spécifique, appelé mode de test, différent du mode de fonctionnement habituel des cartes, par exemple celui permettant d'effectuer des transactions.

Ce mode de test permet au dispositif de vérifier une conformité d'une carte à tester en mettant en œuvre le procédé de vérification selon l'invention.

Les informations transmises dans cette première étape 20 sont par exemple une commande demandant aux cartes de se mettre "à l'écoute" du dispositif de vérification. A la réception de cette commande, les cartes se mettent en mode de test et attendent d'autres informations en provenance du dispositif de vérification.

Le jeu d'informations transmis peut également comprendre des commandes nécessaires à la préparation des cartes avant les étapes suivantes d'analyse 21 des comportements et de décision de conformité 22.

En effet, selon l'invention, le procédé de vérification peut comporter quelques étapes préalables à la vérification elle-même, nécessaires à son efficacité, et permettant notamment de ne pas causer de dommages aux cartes à puce concernées (celle à tester et celle(s) de référence).

Ces étapes sont présentées plus loin, en relation avec les figures 3a, 3b et 4.

Après l'étape 20 de transmission d'un jeu d'informations, les cartes à tester et de référence se trouvent dans un même état de test. L'étape suivante est une étape d'analyse 21 des comportements des deux cartes, en vue d'une étape 22 de décision de conformité, pendant laquelle le dispositif valide ou non la conformité de la carte à tester.

Ces deux étapes 21 et 22 sont également détaillées plus loin, en relation avec les figures 3a, 3b et 4.

On décrit maintenant, en relation avec les figures 3a, 3b et 4, les étapes préalables à la vérification de conformité.

Une première étape préalable à la vérification est une étape (31a, 31b, 41) de désactivation des contre-mesures.

En effet, une carte à puce peut être protégée contre une forme d'attaque particulière, appelée "attaque par mesure de courant" ou "attaque par canaux cachés". Une de ces protections est appelée "contre-mesures" et peut être vue comme un "brouilleur" de courant, c'est-à-dire une méthode permettant de cacher, par exemple à un analyseur de courant, la consommation de la carte pendant son fonctionnement ou de présenter une consommation de courant chaotique de la carte pendant son fonctionnement.

De telles protections doivent être désactivées pendant la mise en œuvre du procédé selon l'invention, celui-ci étant basé sur des mesures de courant dans les cartes à tester et de référence.

Cependant, pour éviter toute désactivation non autorisée des contre-mesures, celle-ci doit être conditionnée à une authentification du dispositif, ici le terminal de paiement, la demandant.

Cette authentification peut mettre en œuvre des procédés d'authentification bien connus de l'homme du métier, tels que des procédés de cryptographie, et donc non détaillés ici.

Ainsi, une fois le terminal authentifié comme étant apte à désactiver les contre-mesures, celui-ci peut commencer la vérification de conformité selon l'invention.

Une deuxième étape préalable à la vérification peut être une étape (32a, 32b, 42) de stabilisation de courant dans les cartes.

En effet, afin de s'assurer d'une bonne efficacité des mesures de courant effectuées, il est souhaitable que la consommation de courant dans les cartes soit préalablement stabilisée, de façon à ne pas prendre en compte des variations dues à des actions précédentes des cartes.

En effet, la consommation de courant à un instant t dans une carte à puce dépend de la tâche effectuée par le circuit électronique à l'instant t et des tâches précédentes. Par exemple, une tâche effectuée à l'instant t-1 peut entraîner des décharges de capacités à l'instant t.

L'étape de stabilisation de courant du procédé consiste à transmettre simultanément à chacune des cartes (de référence et à tester) un certain nombre de commandes prédéterminées, typiquement identiques, permettant de mettre les deux cartes dans un même état de consommation de courant.

Ces commandes peuvent être des sollicitations envoyées aux cartes et entraînant dans celles-ci des actions particulières, voire même des réponses des cartes.

Une fois la consommation de courant stabilisée dans les cartes, le dispositif commence la vérification de conformité, car les deux cartes sont supposées se trouver dans un même état "physique".

On présente maintenant, en relation avec les figures 3a et 3b, un premier mode de réalisation particulier de l'invention dans lequel le procédé de vérification est mis en œuvre dans un terminal de paiement pour vérifier la conformité d'une carte à puce.

### 6.2 Détection d'une carte clonée

### 6.2.1 Première variante

Selon une première variante, illustrée en figure 3a, l'étape 21 d'analyse des comportements (figure 2) consiste à mesurer la consommation de courant dans chacune des deux cartes et à effectuer une corrélation de ces mesures pendant une période déterminée.

Dans cette variante, les étapes 30a de transmission d'un jeu d'informations, 31a de désactivation des contre-mesures et 32a de stabilisation de courant sont les mêmes que celles décrites précédemment.

L'étape 21 d'analyse des comportements comprend dans cette variante les étapes 33a de mesures de courant et 34a d'analyse de ces mesures.

Plus précisément, le terminal dialogue simultanément avec chacune des deux cartes, par exemple en transmettant des informations, des commandes, ou simplement des données aléatoires aux deux cartes, et mesure le courant dans chacune des cartes lors d'une étape 33a de mesures de courant, de façon à disposer d'une séries de mesures ou d'une courbe de consommation de courant pour chacune des cartes.

Selon un autre mode de réalisation, ces dialogues identiques peuvent être effectués séquentiellement (ou de façon alternée) dans la plateforme de référence, puis dans la plateforme à tester. Plus généralement, les différents aspects de l'invention peuvent être mis en œuvre simultanément dans les deux plateformes, ou séquentiellement, dès lors que les conditions externes restent constantes.

Ces mesures de courant sont effectuées au même emplacement sur chaque carte, par exemple au niveau de leurs alimentations respectives, de façon à pouvoir être comparées efficacement.

Une fois ces mesures de courant effectuées, le terminal dispose donc d'une série de mesures, ou d'une courbe, de courant pour chaque carte, correspondant chacune à la consommation de la carte dans les mêmes conditions de test. Il est en effet important de noter que, selon l'invention, on ne cherche pas à vérifier que la carte à tester présente bien, en absolu et dans une situation déterminée, une valeur de courant, qui pourrait être imitée, ou simulée, par une carte fausse habilement réalisée. On vérifie en revanche que le comportement est celui attendu au moment du test, dans les conditions du test, et le cas échéant en fonction de sollicitations et/ou de conditions variables, de façon prédéterminée ou aléatoire.

L'étape suivante 34a d'analyse des mesures de courant, effectuée parallèlement pour la carte à tester et la carte de référence, assure donc une comparaison des comportements électriques de chaque carte dans les mêmes conditions de test.

Cette étape 34a peut par exemple prendre directement en compte les mesures de courant de chaque carte et les corréler, c'est-à-dire comparer leurs valeurs et/ou leurs évolutions. Dans certains cas, il pourra s'agir de comparaisons au sens strict, avec un seuil de tolérance prédéterminé. Pour éviter des erreurs de décision dues par exemple à des variations de conditions externes par rapport à un étalonnage préalable, ou à des différences de consommation dues à la fabrication, il pourra être préférable que la comparaison mette en œuvre une corrélation entre les mesures. Cette corrélation peut notamment être temporelle et/ou fréquentielle (après transformation du signal mesuré par exemple par une FFT), et peut porter sur les mesures de courant elles-mêmes ou sur des signaux représentatifs de ces mesures, ou encore sur toute fonction mathématique d'un signal physique ou d'une information de temps résultant du comportement de chaque carte.

En effet, le terminal peut mettre en œuvre sur les mesures de courant effectuées un traitement préalable à la corrélation, afin d'obtenir de meilleurs résultats en termes d'efficacité et/ou pour rendre encore plus complexe la simulation par une carte ou un programme non conforme.

Ainsi, les mesures de courant peuvent être filtrées, numérisées, amplifiées et/ou subir des transformations mathématiques avant d'être corrélées.

Par exemple, le terminal peut appliquer une transformée de Fourier sur les mesures de courant et ainsi obtenir deux courbes de signaux représentatifs des mesures de courant de chaque carte, afin de pouvoir comparer les variations des amplitudes de chaque courbe sur différentes fréquences.

Si les courbes de mesures de courant, ou les courbes de signaux représentatifs des mesures de courant, obtenues après traitement des mesures de courant, évoluent de manière sensiblement identiques (avec des seuils de tolérance qui seront fixés en fonction des technologies utilisées notamment) sur la période déterminée, le terminal va décider que la carte à tester est une carte valide et délivrer une décision de conformité positive, lors de l'étape 25a de décision de conformité.

En effet, deux cartes comportant deux circuits électroniques optimisés identiques vont présenter un comportement identique en termes de consommation de courant.

Par contre, deux cartes comportant deux circuits électroniques optimisés différents vont se comporter différemment en termes de consommation de courant, même si les comportements logiques programmés sont les mêmes, car une même commande envoyée à chaque carte ne mettra pas en œuvre les mêmes composants des circuits électroniques optimisés et entraînera des consommations de courant différentes pour chaque carte.

Pour obtenir de meilleures performances, les mesures de courant peuvent être soumises à des variations (prédéterminées ou aléatoires) de paramètres externes, tels que la tension d'alimentation, la température ou l'horloge (la fréquence de l'horloge, le rapport cyclique de l'horloge, la forme de l'horloge ...).

En effet, de telles variations vont influer sur les variations de courant des deux cartes mais, si les circuits électroniques optimisés sont identiques sur les deux cartes, l'influence de ces variations de paramètres externes sera la même, car elle dépendra des composants eux-mêmes et de leur organisation sur le circuit. Par contre, si les circuits optimisés sont différents, ces variations n'auront pas les mêmes conséquences sur les mesures de courant des deux cartes.

### 6.2.2 Deuxième variante

Selon une deuxième variante, illustrée en figure 3b, les mesures de courant ne sont pas effectuées pendant une période déterminée de dialogue entre le terminal et les cartes, mais pendant une période déterminée de fonctionnement d'un programme de test préalablement chargé dans chacune des cartes.

Les étapes de transmission d'un jeu d'informations 30b, de désactivation des contre-mesures 31b et de stabilisation de courant 32b, ont déjà été décrites précédemment, notamment dans la description de la première variante du premier mode de réalisation particulier.

Cependant, l'étape 30b de transmission d'un jeu d'informations peut par exemple comprendre également la transmission d'informations indiquant aux cartes qu'elles vont recevoir un programme de test qu'elle devront exécuter ensuite.

Un tel programme de test peut être, selon un premier exemple, connu et contenu dans le terminal ou, selon un deuxième exemple, aléatoire et généré dynamiquement par le terminal au moment de la mise en œuvre du procédé de vérification selon l'invention.

Dans ce deuxième exemple, le terminal génère donc aléatoirement, lors d'une étape 33b de génération, un programme de test. Ce programme aléatoire est destiné à être chargé dans chacune des deux cartes à tester et de référence lors d'une étape 34b de chargement.

Un tel programme de test comporte des instructions qui seront donc exécutées par ces cartes, lors d'une étape 36b de lancement du programme de test.

L'exécution d'un tel programme dans les cartes permet notamment d'automatiser les actions effectuées par les cartes pendant la période de mesures de courant, en remplacement de l'étape de dialogue décrite ci-dessus dans la première variante.

Des précautions peuvent cependant être prises concernant ce programme de test, de façon à ce qu'il n'engendre pas de dégradations du fonctionnement ou de la sécurité des cartes dans lesquelles il est téléchargé.

En effet, le procédé de vérification selon l'invention peut s'assurer que le programme de test utilisé n'accède pas à des zones non autorisées dans la mémoire des cartes, ne modifie pas le comportement des cartes ou ne détruit pas le contenu des cartes.

Pour ce faire, le procédé décrit prévoit la mise en œuvre de règles de sécurisation lors de l'étape de génération aléatoire 33b du programme de test.

Ainsi, le programme de test est généré de manière à ternir compte de critères prédéterminés, par exemple des adresses des zones mémoire non autorisées des cartes. Le programme de test généré peut par exemple être restreint en taille, et/ou contenir une adresse de chargement dans les cartes prédéterminée et réservée, de façon à ce que le programme de test soit confiné dans un espace mémoire réservé dans la mémoire des cartes.

Un autre moyen de contrôle du programme de test peut être mis en œuvre dans les cartes elles-mêmes, après son chargement, lors d'une étape 35b de contrôle. Cette solution permet ainsi aux cartes de vérifier, par elles-mêmes, par exemple que le programme de test ne contient pas d'instructions agressives permettant d'accéder à des zones mémoire non autorisées. Ce contrôle peut également détecter dès le chargement du programme une éventuelle adresse de chargement non autorisée ou une taille du programme non conforme.

Alternativement, le programme de test aléatoire peut contenir une signature, ou un "MAC" ("Message Authentication Code"), que la carte dans lequel il est téléchargé contrôle. Dans ce cas, le dispositif de vérification est supposé digne de confiance.

Une fois cette étape de contrôle du programme de test aléatoire, le terminal peut transmettre à chacune des cartes une commande de lancement du programme, et définir le début et la fin de la période de mesures de courant, en fonction de l'exécution du programme de test. Ce lancement peut également être effectué par les cartes elles-mêmes.

Ainsi, les mesures de courant effectuées lors de l'étape 37b dans chacune des deux cartes sont fonction des instructions du programme de test. Par exemple, on observe les deux cas suivants :
- le cas où la carte à tester est conforme et comporte le même circuit électronique optimisé que la carte de référence : les instructions du programme de test ont les mêmes effets sur les différents composants des deux cartes et les mesures de courant sont corrélées ;
- le cas où la carte à tester n'est pas conforme et ne comporte pas le même circuit électronique optimisé que la carte de référence : les instructions du programme de test n'ont pas les mêmes effets car les composants des deux cartes sont différents et/ou placés à des endroits différents sur les cartes et les mesures de courant sont décorrélées.

Ces étapes de mesures de courant 37b, d'analyse 38b des mesures de courant et de décision de conformité 39b, peuvent être les mêmes que celles décrites dans la première variante de ce mode de réalisation (figure 3a), et ne sont donc pas décrites à nouveau.

De plus, les mesures de courant peuvent également dépendre de variations de paramètres externes, tels que la tension d'alimentation, la température ou l'horloge, comme déjà décrit en relation avec la figure 3a.

Comme déjà mentionné, ces variations peuvent être amplifiées et renforcées, par une conception et/ou une production adaptée des plateformes.

### 6.3 Détection d'un programme non conforme

On présente maintenant, en relation avec la figure 4, un deuxième mode de réalisation particulier de l'invention dans lequel le procédé de vérification est mis en œuvre dans un terminal de paiement pour vérifier la conformité d'un programme présent dans une carte à puce.

Ce mode de réalisation particulier permet au dispositif de vérification, par exemple un terminal de paiement, de s'assurer que le programme à tester contenu dans une carte à puce est conforme à un programme de référence attendu et ne comporte pas d'instructions "malicieuses".

De telles instructions malicieuses peuvent par exemple permettre à une carte frauduleuse d'accéder aux secrets contenus dans la carte en vue de la dupliquer, d'effectuer des transactions non autorisées avec la carte, etc.

Dans ce mode de réalisation particulier, les étapes 41 de désactivation des contre-mesures, 42 de stabilisation de courant, 44 de mesures de courant, 45 d'analyse des mesures de courant et 46 de décision de conformité peuvent être semblables à celles décrites dans le mode de réalisation particulier précédent.

L'étape 40 de transmission d'un jeu d'informations consiste notamment à indiquer à la carte à tester et à la carte de référence qu'elles vont entrer dans un mode de test des programmes présents dans chacune d'elles, c'est à dire le programme à tester (dans la carte à tester) et le programme de référence (dans la carte de référence). Les cartes se mettent ainsi à l'écoute du dispositif de vérification, dans un mode de test et non dans un mode de fonctionnement normal.

Une fois les étapes de désactivation des contre-mesures 41 et de stabilisation de courant 42 (déjà décrites précédemment) effectuées, le dispositif de vérification exécute un programme de vérification lors d'une étape 43 de lancement, accédant simultanément au programme à tester et au programme de référence.

Les mesures de courant (étape 44) sont effectuées pendant une période déterminée de l'exécution du programme de vérification.

En effet, un tel programme de vérification comprend des instructions permettant de manipuler ses propres octets et tous les octets du programme contenus dans la plateforme à tester et dans la plateforme de référence, et si les deux programmes sont identiques. Les manipulation d'octets doivent donc avoir les mêmes conséquences sur les consommations de courant dans les deux cartes, car ces manipulations d'octets entraînent des tâches exécutées par les différents composants des circuits électroniques des cartes.

Ainsi, si les programmes (à tester et de référence) sont identiques, les mesures de courant des deux cartes sont corrélées, sinon elle diffèrent.

Les étapes d'analyse 45 des mesures de courant et de décision de conformité 46 sont les mêmes que celles décrites pour le premier mode de réalisation particulier.

Selon une première variante de ce deuxième mode de réalisation particulier, le programme de vérification est présent dans le terminal mettant en œuvre le procédé de vérification.

Ainsi, l'étape de lancement 43 correspond à l'exécution, dans le terminal, d'un programme, accédant simultanément à ses propres octets et respectivement à ceux des programmes à tester et de référence.

Selon une deuxième variante, le programme de vérification est contenu dans le programme de référence (le programme de fonctionnement de la carte) et donc supposé contenu également dans le programme à tester.

Dans ce cas, l'étape de lancement 43 correspond à l'émission d'une commande, du terminal vers les cartes, pour le lancement de leurs programmes de vérification internes. Ainsi, à la réception de cette commande, un programme de référence présent dans une carte exécute sa partie de vérification, qui contient, comme dans la première variante, des instructions de manipulation de ses propres octets et du reste des octets du programme présent dans la carte.

Les mesures de courant sont effectuées pendant l'exécution de ce programme de vérification et on peut distinguer plusieurs cas différents :
- le cas où le programme à tester est un programme conforme et contient donc un programme de vérification : les programmes de vérification s'exécutent dans les deux cartes et les mesures de courant des cartes à tester et de référence sont corrélées ;
- le cas où le programme à tester n'est pas un programme conforme mais contient quand même un programme de vérification : les programmes de vérification s'exécutent dans les deux cartes mais les mesures de courant des deux cartes sont décorrélées, notamment lorsque le programme de vérification doit manipuler des octets "malveillants" du programme à tester ;
- le cas où le programme à tester n'est pas un programme conforme et ne contient pas de programme de vérification : le programme de vérification se lance dans la carte de référence uniquement et les mesures de courant des deux cartes sont décorrélées.

### 6.4 Compléments et variantes

Les modes de réalisation décrits ci-dessus présentent la mise en œuvre de cartes à puce, en particulier pour des applications bancaires. Il est clair cependant que l'invention peut également être mise en œuvre dans de nombreuses autres applications, dès lors qu'il est nécessaire d'authentifier l'origine et/ou la conformité d'une carte et/ou d'un programme présent sur celle-ci.

Par ailleurs, l'invention ne se limite pas aux cartes à puce, mais peut au contraire être mise en œuvre sur d'autres types de plateformes électroniques, dès lors qu'il est nécessaire de valider leur origine et leur conformité. Par exemple, il est possible de vérifier selon l'invention des éléments RFID. Dans ce cas, la comparaison des comportements pourra prendre en compte les rayonnements électromagnétiques d'un élément RFID de référence et d'un élément RFID à tester, en mettant en œuvre une approche similaire à celle décrite précédemment.

## Revendications

1. Procédé de vérification (13) d'une conformité d'une plateforme électronique, dite plateforme à tester (12), et/ou d'un programme informatique à tester présent dans ladite plateforme à tester,
ledit procédé comprenant :
- une étape de transmission (20; 30a; 30b; 40), par un dispositif de vérification (10), d'un même jeu d'informations d'une part à ladite plateforme à tester et d'autre part à une plateforme de référence de conformité (11) présente dans ledit dispositif de vérification, et
- une étape de décision de conformité (22; 35a; 39b; 46) de ladite plateforme à tester et/ou dudit programme informatique à tester, en fonction d'une analyse (21) des comportements respectifs de ladite plateforme à tester et de ladite plateforme de référence,
ladite analyse mettant en œuvre une corrélation entre au moins deux signaux représentatifs de mesures de courant effectuées simultanément ou séquentiellement respectivement sur ladite plateforme à tester et ladite plateforme de référence, sur une période de mesure prédéterminée,
**caractérisé en ce qu'**il comprend en outre :
- une étape de désactivation d'une protection contre des attaques par canaux cachés, préalable à ladite analyse, ladite désactivation étant conditionnée à une authentification dudit dispositif de vérification.

2. Procédé de vérification selon la revendication 1, **caractérisé en ce que** ladite corrélation met en œuvre au moins un des calculs appartenant au groupe comprenant :
- un calcul de corrélation temporelle ;
- un calcul de corrélation fréquentielle.

3. Procédé de vérification selon l'une quelconque des revendications 1 à 2, **caractérisé en ce que** lesdites mesures de courant subissent au moins un des traitements préalables appartenant au groupe comprenant :
- les filtrages ;
- les numérisations ;
- les transformations mathématiques ;
- les amplifications .

4. Procédé de vérification selon l'une quelconque des revendications 1 à 3, **caractérisé en ce que** lesdites mesures de courant sont effectuées sur les alimentations respectives desdites plateforme à tester et plateforme de référence.

5. Procédé de vérification selon l'une quelconque des revendications 1 à 4, **caractérisé en ce qu'**il comprend une étape de stabilisation de la consommation de courant desdites plateforme à tester et plateforme de référence, préalable à ladite analyse.

6. Procédé de vérification selon la revendication 5, **caractérisé en ce que** ladite étape de stabilisation comprend une transmission d'une série de commandes identiques simultanément auxdites plateforme à tester et plateforme de référence.

7. Procédé de vérification selon l'une quelconque des revendications 1 à 6, **caractérisé en ce que** lesdites plateforme à tester et plateforme de référence sont soumises, pendant ladite analyse, à au moins une variation d'au moins un paramètre externe appartenant au groupe comprenant :
- la valeur de la tension d'alimentation ;
- la forme de la tension d'alimentation ;
- la température ;
- la fréquence d'horloge ;
- le rapport cyclique d'horloge ;
- la forme de l'horloge.

8. Procédé de vérification selon l'une quelconque des revendications 1 à 7, **caractérisé en ce que** plusieurs plateformes de référence sont présentes dans ledit dispositif de vérification,
et **en ce qu'**il comprend une étape de sélection de la plateforme de référence correspondant à la plateforme à tester.

9. Procédé de vérification selon l'une quelconque des revendications 1 à 8, **caractérisé en ce qu'**il comprend, pendant ladite analyse, les étapes suivantes :
- une étape de chargement dynamique d'au moins un programme de test simultanément ou séquentiellement dans lesdites plateforme à tester et plateforme de référence, à des emplacements mémoire identiques ;
- une étape de lancement dudit programme de test, simultanément ou séquentiellement dans lesdites plateforme à tester et plateforme de référence.

10. Procédé de vérification selon la revendication 9, **caractérisé en ce qu'**il comprend une étape de génération aléatoire dudit programme de test, préalable à ladite étape de chargement dynamique.

11. Procédé de vérification selon la revendication 10, **caractérisé en ce que** ladite étape de génération dudit programme de test tient compte d'au moins une règle de confinement dudit programme aléatoire dans un espace mémoire prédéterminé, interdisant un accès à des zones de mémoire non autorisées de ladite plateforme à tester et de ladite plateforme de référence.

12. Procédé de vérification selon l'une quelconque des revendications 10 et 11, **caractérisé en ce qu'**il comprend une étape de contrôle dudit programme de test aléatoire par la plateforme dans laquelle il est téléchargé.

13. Procédé de vérification selon l'une quelconque des revendications 9 à 12, **caractérisé en ce que** ledit dispositif de vérification transmet au moins une donnée aléatoire audit programme de test pendant ladite analyse.

14. Procédé de vérification selon l'une quelconque des revendications 1 à 7, **caractérisé en ce qu'**il comprend, pendant ladite analyse, une étape de lancement d'un programme de vérification accédant simultanément à un programme à tester dans ladite plateforme à tester et à un programme correspondant présent dans ladite plateforme de référence, dit programme de référence.

15. Procédé de vérification selon la revendication 14, **caractérisé en ce que** ledit programme de vérification comprend des instructions de manipulation de ses propres octets et, respectivement, de tous les octets de l'ensemble des espaces mémoire de ladite plateforme à tester et de ladite plateforme de référence, au moins certaines desdites instructions de manipulation appartenant au groupe comprenant :
- un calcul effectué sur des octets ;
- un chargement et un déchargement d'octets en mémoire.

16. Procédé de vérification selon l'une quelconque des revendications 14 et 15, caractérisé en ce en ce que ledit programme de vérification est stocké dans chacune desdites plateformes.

17. Procédé de vérification selon la revendication 16, **caractérisé en ce qu'**il comprend, avant ladite étape de lancement dudit programme de vérification, une étape de lancement d'un programme comprenant au moins une instruction d'accès audit programme à tester et audit programme de référence permettant de lancer ledit programme de vérification.

18. Dispositif de vérification d'une conformité d'une plateforme électronique, dite plateforme à tester, et/ou d'un programme informatique à tester présent dans ladite plateforme à tester selon le procédé selon l'une quelconque des revendications 1 à 18,
ledit dispositif de vérification comprenant :
- des moyens de transmission d'un même jeu d'informations d'une part à ladite plateforme à tester et d'autre part à une plateforme de référence de conformité présente dans ledit dispositif de vérification, et
des moyens de décision de conformité de ladite plateforme à tester et/ou dudit programme informatique à tester, en fonction d'une analyse des comportements respectifs de ladite plateforme à tester et de ladite plateforme de référence, ladite analyse mettant en œuvre une corrélation entre au moins deux signaux représentatifs de mesures de courant effectuées simultanément ou séquentiellement respectivement sur ladite plateforme à tester et ladite plateforme de référence, sur une période de mesure prédéterminée,
**caractérisé en ce qu'**il comprend en outre :
- des moyens de désactivation d'une protection contre des attaques par canaux cachés, préalable à ladite analyse, ladite désactivation étant conditionnée à une authentification dudit dispositif de vérification.

19. Dispositif de vérification selon la revendication 18, **caractérisé en ce qu'**il comprend des moyens de débit d'une carte bancaire portant ladite plateforme à tester, contrôlés par lesdits moyens de décision.

20. Produit programme d'ordinateur de vérification téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de vérification selon l'une au moins des revendications 1 à 17.

21. Plateforme électronique configurée pour être vérifié selon le procédé de vérification selon l'une quelconque des revendications 1 à 17, **caractérisé en ce qu'**il comprend des moyens d'amplification et/ou d'augmentation des variations d'au moins une des caractéristiques dudit comportement.

## Patentansprüche

1. Verfahren zum Überprüfen (13) einer Konformität einer elektronischen Plattform, die zu testende Plattform (12) genannt wird, und/oder eines zu testenden Computerprogramms, das auf der zu testenden Plattform vorhanden ist,
wobei das Verfahren aufweist:
- einen Schritt des Übertragens (20; 30a; 30b; 40) durch eine Vorrichtung zum Überprüfen (10) eines gleichen Satzes von Informationen einerseits an die zu testende Plattform und andererseits an eine Konformitäts-Referenzplattform (11), die in der Vorrichtung zum Überprüfen vorhanden ist,
- einen Schritt des Entscheidens der Konformität (22; 35a; 39b; 46) der zu testenden Plattform und/oder des zu testenden Computerprogramms in Abhängigkeit von einer Analyse (21) des jeweiligen Verhaltens der zu testenden Plattform und der Referenzplattform,
wobei die Analyse eine Korrelation zwischen mindestens zwei Signalen umsetzt, die für Strommessungen repräsentativ sind, die gleichzeitig oder nacheinander jeweils auf der zu testende Plattform und der Referenzplattform über einen vorbestimmten Messzeitraum durchgeführt werden,
**dadurch gekennzeichnet, dass** es ferner aufweist:
- einen Schritt des Deaktivierens eines Schutzes vor Angriffen durch verdeckte Kanäle vor der Analyse, wobei das Deaktivieren von der Authentifizierung der Vorrichtung zum Überprüfen abhängig ist.

2. Verfahren zum Überprüfen nach Anspruch 1, **dadurch gekennzeichnet, dass** die Korrelation mindestens eine der Berechnungen umsetzt, die zu der Gruppe gehören, umfassend:
- eine Berechnung der zeitlichen Korrelation,
- eine Berechnung der Frequenzkorrelation.

3. Verfahren zum Überprüfen nach einem der Ansprüche 1 bis 2, **dadurch gekennzeichnet, dass** die Strommessungen mindestens einer der Vorbehandlungen unterzogen werden, die zu der Gruppe gehören, umfassend:
- die Filterungen,
- die Digitalisierungen,
- die mathematischen Transformationen,
- die Amplifikationen.

4. Verfahren zum Überprüfen nach einem der Ansprüche 1 bis 3, **dadurch gekennzeichnet, dass** die Strommessungen an den jeweiligen Stromversorgungen der zu testenden Plattform und der Referenzplattform durchgeführt werden.

5. Verfahren zum Überprüfen nach einem der Ansprüche 1 bis 4, **dadurch gekennzeichnet, dass** es vor der Analyse einen Schritt des Stabilisierens des Stromverbrauchs der zu testenden Plattform und der Referenzplattform aufweist.

6. Verfahren zum Überprüfen nach Anspruch 5, **dadurch gekennzeichnet, dass** der Schritt des Stabilisierens ein Übertragen einer Reihe von identischen Befehlen gleichzeitig an die zu testende Plattform und an die Referenzplattform aufweist.

7. Verfahren zum Überprüfen nach einem der Ansprüche 1 bis 6, **dadurch gekennzeichnet, dass** die zu testende Plattform und die Referenzplattform während der Analyse mindestens einer Variation mindestens eines externen Parameters unterzogen werden, der zur Gruppe gehört, umfassend:
- den Wert der Versorgungsspannung,
- die Form der Versorgungsspannung,
- die Temperatur,
- die Taktfrequenz,
- das zyklische Taktverhältnis,
- die Form der Taktfrequenz.

8. Verfahren zum Überprüfen nach einem der Ansprüche 1 bis 7, **dadurch gekennzeichnet, dass** mehrere Referenzplattformen in der Vorrichtung zum Überprüfen vorhanden sind,
und dadurch, dass es einen Schritt des Auswählens der Referenzplattform aufweist, die der zu testenden Plattform entspricht.

9. Verfahren zum Überprüfen nach einem der Ansprüche 1 bis 8, **dadurch gekennzeichnet, dass** es während der Analyse die folgenden Schritte aufweist:
- einen Schritt des dynamischen Ladens mindestens eines Testprogramms gleichzeitig oder nacheinander in die zu testende Plattform oder die Referenzplattform an identischen Speicherorten,
- einen Schritt des Startens des Testprogramms gleichzeitig oder nacheinander auf der zu testenden Plattform und der Referenzplattform.

10. Verfahren zum Überprüfen nach Anspruch 9, **dadurch gekennzeichnet, dass** es einen Schritt der Zufallserzeugung des Testprogramms vor dem Schritt des dynamischen Ladens aufweist.

11. Verfahren zum Überprüfen nach Anspruch 10, **dadurch gekennzeichnet, dass** der Schritt des Erzeugens des Testprogramms mindestens eine Regel des Beschränkens des Zufallsprogramms auf einen vorbestimmten Speicherplatz berücksichtigt, die den Zugriff auf nicht autorisierte Speicherbereiche der zu testenden Plattform und der Referenzplattform verbietet.

12. Verfahren zum Überprüfen nach einem der Ansprüche 10 und 11, **dadurch gekennzeichnet, dass** es einen Schritt des Überprüfens des Zufalls-Testprogramms durch die Plattform, auf die es hochgeladen ist, aufweist.

13. Verfahren zum Überprüfen nach einem der Ansprüche 9 bis 12, **dadurch gekennzeichnet, dass** die Vorrichtung zum Überprüfen während der Analyse mindestens ein Zufallsdatum an das Testprogramm überträgt.

14. Verfahren zum Überprüfen nach einem der Ansprüche 1 bis 7, **dadurch gekennzeichnet, dass** es während der Analyse einen Schritt des Startens eines Überprüfungsprogramms aufweist, das gleichzeitig auf ein zu testendes Programm auf der zu testenden Plattform und auf ein entsprechendes Programm, das auf der Referenzplattform vorhanden ist, das Referenzprogramm genannt wird, zugreift.

15. Verfahren zum Überprüfen nach Anspruch 14, **dadurch gekennzeichnet, dass** das Überprüfungsprogramm Anweisungen zum Manipulieren seiner eigenen Bytes und jeweils aller Bytes der Gesamtheit der Speicherplätze der zu testenden Plattform und der Referenzplattform aufweist, wobei mindestens einige der Anweisungen zum Manipulieren zur Gruppe gehören, umfassend:
- ein Berechnen, das an Bytes durchgeführt wird,
- ein Hochladen von Bytes in den Speicher und ein Herunterladen von Bytes von dem Speicher.

16. Verfahren zum Überprüfen nach einem der Ansprüche 14 und 15, **dadurch gekennzeichnet, dass** das Überprüfungsprogramm in jeder der Plattformen gespeichert wird.

17. Verfahren zum Überprüfen nach Anspruch 16, **dadurch gekennzeichnet, dass** es vor dem Schritt des Startens des Überprüfungsprogramms einen Schritt des Startens eines Programms aufweist, das mindestens eine Anweisung zum Zugriff auf das zu testende Programm und auf das Referenzprogramm aufweist, was ermöglicht, das Überprüfungsprogramm zu starten.

18. Vorrichtung zum Überprüfen einer Konformität einer elektronischen Plattform, die zu testende Plattform genannt wird, und/oder eines zu testenden Computerprogramms, das auf der zu testenden Testplattform vorhanden ist, nach einem der Ansprüche 1 bis 18,
wobei die Vorrichtung zum Überprüfen aufweist:
- Mittel zum Übertragen eines gleichen Satzes von Informationen einerseits an die zu testende Plattform und andererseits an eine Konformitäts-Referenzplattform, die in der Vorrichtung zum Überprüfen vorhanden ist, und
Mittel zum Entscheiden der Konformität der zu testende Plattform und/oder des zu testenden Computerprogramms in Abhängigkeit von einer Analyse des jeweiligen Verhaltens der zu testenden Plattform und der Referenzplattform, wobei die Analyse eine Korrelation zwischen mindestens zwei Signalen implementiert, die für Strommessungen repräsentativ sind, die gleichzeitig oder nacheinander jeweils auf der zu testenden Plattform und der Referenzplattform über einen vorbestimmten Messzeitraum durchgeführt werden,
**dadurch gekennzeichnet, dass** sie ferner aufweist:
- Mittel zum Deaktivieren eines Schutzes vor Angriffen durch verdeckte Kanäle vor der Analyse, wobei das Deaktivieren von der Authentifizierung der Vorrichtung zum Überprüfen abhängig ist.

19. Vorrichtung zum Überprüfen nach Anspruch 18, **dadurch gekennzeichnet, dass** sie Mittel zum Abbuchen von einer Bankkarte aufweist, die die zu testende Plattform trägt, die durch die Mittel zum Entscheiden gesteuert sind.

20. Computerprogrammprodukt zum Überprüfen, das von einem Kommunikationsnetz heruntergeladen werden kann und/oder auf einem computerlesbaren Medium gespeichert ist und/oder von einem Mikroprozessor ausgeführt werden kann, **dadurch gekennzeichnet, dass** es Programmcodebefehle für das Ausführen des Verfahrens nach einem der Ansprüche 1 bis 17 aufweist.

21. Elektronische Plattform, die konfiguriert ist, um nach dem Verfahren zum Überprüfen nach einem der Ansprüche 1 bis 17 überprüft zu werden, **dadurch gekennzeichnet, dass** sie Mittel zum Verstärken und/oder Erhöhen der Veränderungen von mindestens einem der Merkmale des Verhaltens aufweist.

## Claims

1. Method for auditing (13) compliance of an electronic platform, referred to as the platform being tested (12), and/or a computer program being tested, which is present on said platform being tested, **characterised in that** it includes:
- a step for transmitting (20; 30a; 30b; 40) the same data set, via an auditing device (10), to said platform being tested, on the one hand, and, on the other hand, to a compliant reference platform (11) present in said auditing device, and
- a step for deciding upon the compliance (22; 35a; 39b; 46) of said platform being tested and/or said computer program being tested, based on an analysis (21) of the respective behaviours of said platform being tested and said reference platform,
said analysis implementing a correlation between at least two signals representative of current measurements performed simultaneously or sequentially respectively on said platform to be tested and said reference platform, over a predetermined measurement period,
**characterised in that** it further includes:
- a step for deactivating a safeguard against attacks by covert channels, prior to said analysis, said deactivation being conditional upon authentication of said auditing device.

2. Auditing method of claim 1, **characterised in that** said correlation implements at least one of the calculations belonging to the group comprising:
- a temporal correlation calculation;
- a frequency correlation calculation.

3. Auditing method as claimed in any of claims 1 to 2, **characterised in that** said current measurements undergo at least one of the preprocessing operations belonging to the group comprising:
- filtering;
- digitization;
- mathematical transformations;
- amplification.

4. Auditing method as claimed in any of claims 1 to 3, **characterised in that** said current measurements are carried out on the respective power supplies of said platform being tested and said reference platform.

5. Auditing method as claimed in any of claims 1 to 4, **characterised in that** it includes a step for stabilizing the current consumption of said platform being tested and said reference platform, prior to said analysis.

6. Auditing method of claim 5, **characterised in that** said stabilization step includes transmission of a series of identical commands, simultaneously to said platform being tested and said reference platform.

7. Auditing method as claimed in any of claims 1 to 6, **characterised in that**, during said analysis, said platform being tested and said reference platform are subjected to at least one variation of at least one external parameter belonging to the group comprising:
- the supply voltage value;
- the type of supply voltage;
- the temperature;
- the clock frequency;
- the clock cycle ratio;
- the type of clock.

8. Auditing method as claimed in any of claims 1 to 7, **characterised in that** several reference platforms are present in said auditing device, and **in that** it includes a step for selecting said reference platform corresponding to the platform being tested.

9. Auditing method as claimed in any of claims 1 to 8, **characterised in that**, during said analysis, it includes the following steps:
- a step for simultaneous or sequential dynamic loading of at least one test program into said platform being tested and said reference platform, at identical memory locations;
- a step for simultaneously or sequentially launching said test program into said platform being tested and said reference platform.

10. Auditing method of claim 9, **characterised in that** it includes a step for randomly generating said test program, prior to said dynamic loading step.

11. Auditing method of claim 10, **characterised in that** said step for generating said test program takes account of at least one rule for confining said random program to a predetermined memory space, prohibiting access to unauthorized memory areas of said platform being tested and said reference platform.

12. Auditing method as claimed in any of claims 10 and 11, **characterised in that** it includes a step for verifying said random test program by the platform onto which it is downloaded.

13. Auditing method as claimed in any of claims 9 to 12, **characterised in that** said auditing device transmits at least one random data item to said test program during said analysis.

14. Auditing method as claimed in any of claims 1 to 7, **characterised in that**, during said analysis, it includes a step for launching an auditing program which simultaneously or sequentially accesses a program being tested in said platform being tested, and a corresponding program in said reference platform, known as the reference program.

15. Auditing method of claim 14, **characterised in that** said auditing program includes instructions for handling its own octets and all of the octets of the entire set of memory spaces of the platform being tested and the reference platform, respectively, at least some of said handling instructions belonging to the group comprising:
- a calculation carried out on the octets;
- loading and unloading of octets into/from memory.

16. Auditing method as claimed in any of claims 14 and 15, **characterised in that** said auditing program is stored in each of said platforms.

17. Auditing method of claim 16, **characterised in that**, prior to the step for launching said auditing program, the method includes a step for launching a program including at least one instruction for accessing said program being tested and said reference program, enabling said auditing program to be launched.

18. Device for auditing compliance of an electronic platform, known as the platform being tested, and/or a computer program being tested which is present in said platform being tested according to the method as claimed in any of claims 1 to 18, **characterised in that** it includes:
- means for transmitting a single data set to said platform being tested, on the one hand, and, on the other hand, to a compliant reference platform present in said auditing device, and
- means for determining the compliance of said platform being tested and/or said computer program being tested, based on analysis of the respective behaviours of said platform being tested and said reference platform, said analysis implementing a correlation between at least two signals representative of current measurements performed simultaneously or sequentially respectively on said platform to be tested and said reference platform, over a predetermined measurement period,
**characterised in that** it further includes:
- means for deactivating a safeguard against attacks by covert channels, prior to said analysis, said deactivation being conditional upon authentication of said auditing device.

19. Auditing device of claim 18, **characterised in that** it includes debiting a bank card equipped with said platform being tested, which are controlled by said decision-making means.

20. Auditing computer program product that can be downloaded from a communication network and/or stored on a machine-readable and/or microprocessor-executable medium, **characterised in that** it includes program code instructions for carrying out the auditing method as claimed in any of claims 1 to 17.

21. Electronic platform configured for being audited according to the auditing method as claimed in any of claims 1 to 17, **characterised in that** it includes means of amplifying and/or increasing the variations of at least one of the characteristics of said behaviour.
